# EUROPÄISCHE PATENTANMELDUNG

(11) **EP 0 919 799 A2**
(43) Veröffentlichungstag der Anmeldung: **02.06.1999**
(21) Anmeldenummer: 98121069.3
(22) Anmeldetag: 06.11.1998
(51) Int. Cl.: G01N 3/28

(54) **Prüfvorrichtung für insbesondere zusammengeschweisste Metallbleche nach der Tiefungsversuchsmethode**

(30) Priorität: 29.11.1997 DE 19753159
(71) Anmelder: Thyssen Krupp Stahl AG, 40211 Düsseldorf (DE)
(72) Erfinder: Koch, Martin Dr., 47506 Neukirchen-Vluyn (DE); Stegemann-Aughage, Thomas Dipl.-Ing., 46537 Dinslaken (DE); Baumgarth, Marco, 38118 Braunschweig (DE)
(74) Vertreter: Cohausz & Florack

(57) **Zusammenfassung**

Um nach der Tiefungsversuchsmethode Bleche unterschiedlicher Dicke, insbesondere zusammengeschweißte Bleche unterschiedlicher Dicke, prüfen zu können, ist eine Prüfvorrichtung aus Blechhalter (1), Matrize (2) und Stempel (3) sowie einem auf das zu prüfende Blech (4) über dem Blechhalter (1) und die Matrize (2) klemmend wirksamen Stellmittel (8a,8b) vorgesehen, bei der die Matrize (2) an ihrer Arbeitsseite zwei auf verschiedene Höhen einstellbare Klemmbacken (2a,2b) aufweist, die mit im wesentlichen gleicher Klemmkraft beaufschlagt sind.

## Beschreibung

Die Erfindung betrifft eine Prüfvorrichtung für Metallbleche nach der Tiefungsversuchsmethode, bestehend aus einem Blechhalter, einer Matrize und einem Stempel sowie einem auf ein zwischen dem Blechhalter und der Matrize eingespanntes Blechteil klemmend einwirkenden Stellmittel.

Eine solche Prüfvorrichtung für Tiefungsversuche an Blechen und Bändern mit einer Breite von ≥ 90 mm und einem Dickenbereich zwischen 0,2 mm und 2 mm ist aus DIN 50101, September 1979 bekannt. Mit einer solchen Vorrichtung läßt sich die Tiefziehfähigkeit von Blechen und Bändern feststellen. Dazu wird der Stempel gleichförmig mit einer bestimmten Vorschubgeschwindigkeit gegen das Blech gedrückt, bis es einreißt. Die bekannte Prüfvorrichtung ist allerdings nur geeignet, Bleche zu prüfen, die im gesamten Einspannbereich die gleiche Dicke haben. Aus verschieden dicken Blechen zusammengeschweißte Bleche lassen sich mit einer solchen Vorrichtung nicht prüfen, weil die Prüfvorrichtung solche Bleche nicht in einem geschlossenen Ringbereich um den Prüfort, wo der Stempel wirksam wird, mit der gleichen Flächenpressung festspannen kann.

Der Erfindung liegt die Aufgabe zugrunde, eine Prüfvorrichtung für Metallbleche nach der Tiefungsversuchsmethode zu schaffen, die auch die Prüfung von Blechen mit unterschiedlicher Dicke im Einspannbereich ermöglicht.

Diese Aufgabe wird erfindungsgemäß dadurch gelöst, daß die Matrize an ihrer Arbeitsseite zwei auf verschiedene Höhen einstellbare Klemmbacken aufweist, die mit im wesentlichen gleicher Klemmkraft beaufschlagt sind.

Bei der Erfindung kann durch die Möglichkeit der Einstellung der Klemmbacken auf verschiedene Höhen der unterschiedlichen Materialdicke des zu prüfenden Bleches Rechnung getragen werden, so daß auch ein Blech unterschiedlicher Dicke, insbesondere ein aus verschieden dicken Blechen zusammengeschweißtes Blech, im gesamten eingespannten Ringbereich mit gleicher Klemmkraft eingespannt werden kann. Bei einem derartigen zusammengeschweißten Blech ist deshalb auch eine Prüfung der Schweißnaht möglich.

Die Klemmbacken können elastisch abgestützt sein. Dadurch ergibt sich eine Vergleichmäßigung der Klemmkraft bei Dickentoleranzen.

Die Aufteilung der Klemmbacken läßt sich auf verschiedene Weise verwirklichen. Entweder ist die Matrize selbst zweigeteilt und läßt eine unterschiedliche Höheneinstellung ihrer beiden Teile zu oder aber die Klemmbacken sitzen in Taschen einer als Joch ausgebildeten Matrize und sind an auswechselbaren Einsatzkörpern abgestützt. Im zweiten Fall kann über die Höhe der Einsatzkörper die unterschiedliche Dicke des einzuspannenden Bleches berücksichtigt werden. Alternativ kann bei der als Joch ausgebildeten Matrize mindestens eine Klemmbacke an einem Stellmittel, insbesondere einer Stellschraube, abgestützt sein.

Während es bei den vorgenannten Ausgestaltungen notwendig ist, daß die Bedienungsperson bei der Einrichtung der Prüfvorrichtung die unterschiedliche Dicke der Bleche durch entsprechende Auswahl der Einsatzkörper oder durch Einstellung der Backen oder Matrizenhälften berücksichtigt, sieht eine weitere Ausgestaltung der Erfindung eine automatische Anpassung bei gleichzeitiger Kraftaufteilung vor. Nach dieser Ausgestaltung sind die Klemmbacken oder die Matrizenhälften an einer mechanischen oder hydraulischen Wippe abgestützt.

Im folgenden wird die Erfindung anhand einer Ausführungsbeispiele darstellenden Zeichnung näher erläutert. Im einzelnen zeigen:
- Figur 1: eine Prüfvorrichtung teilweise in schematischer Darstellung im axialen Halbschnitt,
- Figur 2: einen Teil einer Prüfvorrichtung in einer zu Figur 1 anderen Ausführung im axialen Halbschnitt,
- Figur 3: einen Teil einer Prüfvorrichtung in einer zu Figur 1 und 2 anderen Ausführung im axialen Halbschnitt
**und**
- Figur 4: einen Teil einer Prüfvorrichtung in einer zu den Figuren 1 bis 3 anderen Ausführung im axialen Halbschnitt.

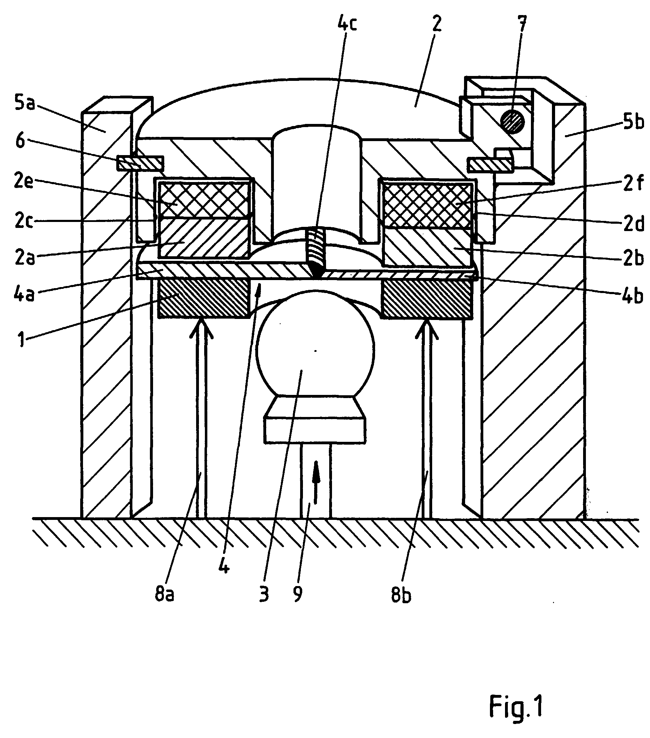

Die Hauptkomponenten der in Figur 1 dargestellten Prüfvorrichtung sind ein ringförmiger Blechhalter 1 mit einer ebenen Auflagefläche, eine Matrize 2 mit zwei Klemmbacken 2a,2b und ein Stempel 3. Zwischen dem Blechhalter 1 und der Matrize 2 ist ein aus verschieden dicken Blechen 4a,4b über eine Schweißnaht 4c verbundenes Blechteil 4 eingespannt.

Die Matrize 2 ist in einem zweiteiligen Ständer 5a,5b nach Art eines Joches gehalten. Sie kann in diesem Ständer 5a,5b mittels eines Bajonettverschlusses 6 verriegelt werden. Nach Lösen des Bajonettverschlusses 6 kann die Matrize 2 um ein Schwenklager 7 hochgeklappt werden, um eine Blechprobe 4 einzulegen. Die Matrize 2 weist zwei Taschen 2c,2d auf, in denen die Klemmbacken 2a,2b beweglich sitzen und an insbesondere elastischen Einsatzkörpern 2e,2f unterschiedlicher Höhe abgestützt sind. Mit unterschiedlich hohen Einsatzkörpern 2e,2f läßt sich erreichen, daß die Klemmbacken 2a,2b in verschiedenen Ebenen mit einem Höhenversatz ihrer Druckseiten liegen, der dem Dickenunterschied der beiden Bleche 4a,4b entspricht. Die beiden Klemmbacken 2a,2b mit ihren Einsatzkörpern 2e,2f sind so angeordnet, daß die Schweißnaht 4c in der Trennfuge der beiden Klemmbacken 2a,2b liegt.

Die Arbeitsweise der Prüfvorrichtung ist folgende: Unter Berücksichtigung des Dickenunterschiedes der Bleche 4a,4b werden, wie ausgeführt, die Einsatzkörper 2e,2f ausgewählt. Bei hochgeklappter Matrize 2 werden diese Einsatzkörper 2e,2f und die Klemmbacken 2a,2b in die Taschen 2c,2d der Matrize 2 eingesetzt. Das zu prüfende Blechteil 4 wird auf den Blechhalter 1 aufgelegt und die Matrize 2 in die in der Figur 1 dargestellte Stellung verschwenkt. Mit dem Bajonettverschluß 6 wird die Matrize 2 in dem zweiteiligen Ständer 5a,5b verriegelt. Dann wird mittels eines schematisch angedeuteten, auf den Blechhalter 1 einwirkenden Stellmittels 8a,8b die erforderliche Klemmkraft aufgebracht. Bei über den gesamten Umfang gleichmäßig fest eingespanntem Blechteil 4 wird der Stempel 3 mit einem schematisch dargestellten Stellglied 9 gegen das Blechteil 4 gedrückt. Da die Schweißnaht 4c im Bereich des Stempels 3 liegt, läßt sich deren Qualität mit einer solchen Prüfvorrichtung feststellen.

Die übrigen Ausführungsbeispiele stimmen mit dem Ausführungsbeispiel der Figur 1 in vielen Elementen überein, so daß für gleiche Elemente die gleichen Bezugszeichen verwendet worden sind. Soweit sie sich unterscheiden, werden sie im folgenden beschrieben.

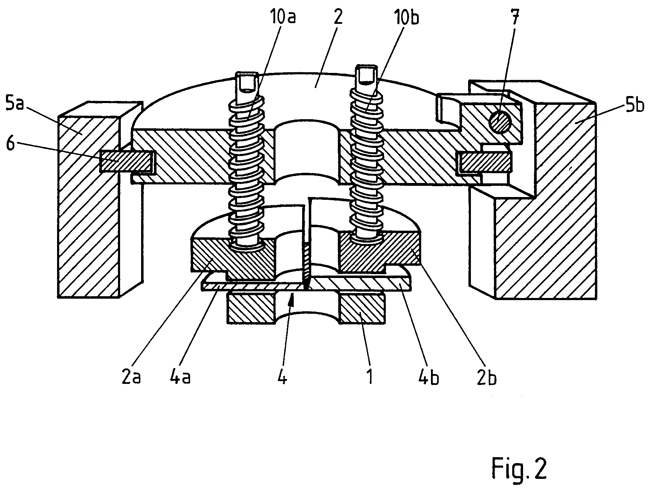

Beim Ausführungsbeispiel der Figur 2 sind die zweigeteilten Klemmbacken 2a,2b an Schraubenspindeln 10a,10b abgestützt, die im Joch 2 mit Gewinde sitzen. Durch Verdrehen der Schraubenspindeln 10a,10b können die Klemmbacken 2a,2b auf unterschiedliche Dicken des Blechteils 4 eingestellt werden.

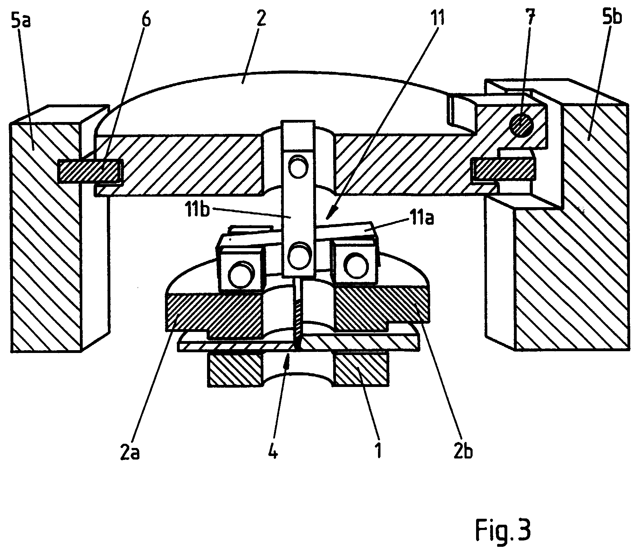

Beim Ausführungsbeispiel der Figur 3 sind die Klemmbacken 2a,2b von einer mechanischen Wippe 11 mit einem Wippenbalken 11a und einer mittigen Stütze 11b gehalten, die ihrerseits im Joch 2 gehalten ist.

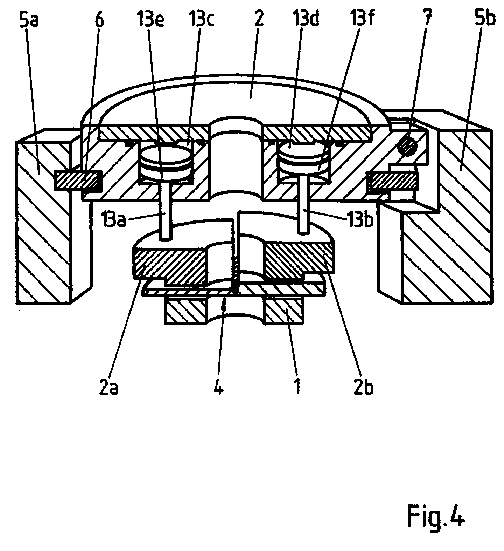

Beim Ausführungsbeispiel der Figur 4 sind die beiden Klemmbacken 2a,2b an Kolbenstangen 13a,13b einer hydraulischen Wippe gehalten. Dazu sind in dem Joch 2 Zylinderkolbenräume 13c,13d ausgebildet, in denen Zylinderkolben 13e,13f sitzen. Durch gemeinsame Druckbeaufschlagung dieser beiden Kolben 13e,13f findet ein Kraftausgleich statt.

Sowohl beim Ausführungsbeispiel der Figur 3 als auch bei dem der Figur 4 findet durch die mechanische beziehungsweise hydraulische Wippe automatisch eine Anpassung an unterschiedlich dicke Blechteile bei gleichzeitigem Kraftausgleich statt.

## Patentansprüche

1. Prüfvorrichtung für Metallbleche nach der Tiefungsversuchsmethode, bestehend aus einem Blechhalter (1), einer Matrize (2) und einem Stempel (3) sowie einem auf ein zwischem dem Blechhalter (1) und der Matrize (2) eingespanntes Blechteil klemmend einwirkenden Stellmittel (8a,8b),
**dadurch gekennzeichnet, daß** die Matrize (2) an ihrer Arbeitsseite zwei auf verschiedene Höhen einstellbare Klemmbacken (2a,2b) aufweist, die mit im wesentlichen gleicher Klemmkraft beaufschlagt sind.

2. Prüfvorrichtung nach Anspruch 1
**dadurch gekennzeichnet, daß** die Matrize (2) zweigeteilt ist.

3. Prüfvorrichtung nach Anspruch 1,
**dadurch gekennzeichnet, daß** die Klemmbacken (2a,2b) in Taschen (2c,2d) der als Joch ausgebildeten Matrize (2) gehalten und an auswechselbaren Einsatzkörpern (2e,2f) abgestützt sind.

4. Prüfvorrichtung nach Anspruch 1,
**dadurch gekennzeichnet, daß** die Klemmbacken (2a,2b) von Stellschrauben (10a,10b) getragen sind, die in der als Joch ausgebildeten Matrize (2) sitzen.

5. Prüfvorrichtung nach Anspruch 1,
**dadurch gekennzeichnet, daß** die Klemmbacken (2a,2b) an einer mechanischen oder hydraulischen Wippe (11,13a-13d) abgestützt sind.

6. Prüfvorrichtung nach einem der Ansprüche 1 bis 5, **dadurch gekennzeichnet, daß** die Klemmbacken (2a,2b) elastisch abgestützt sind.
